# EUROPÄISCHE PATENTSCHRIFT

(11) **EP 0 707 835 B1**
(45) Veröffentlichungstag und Bekanntmachung des Hinweises auf die Patenterteilung: **08.03.2000**
(21) Anmeldenummer: 95115932.6
(22) Anmeldetag: 10.10.1995
(51) Int. Cl.: A61C 8/00

(54) **Zweiphasiges Zahnimplantat**
Two-phase dental implant
Implant dentaire diphasé

(30) Priorität: 17.10.1994 CH 310694
(43) Veröffentlichungstag der Anmeldung: 24.04.1996
(73) Patentinhaber: Degussa-Hüls Aktiengesellschaft, 60287 Frankfurt am Main (DE)
(72) Erfinder: Moser, Walter, Dr., CH-3126 Kaufdorf (CH); Nentwig, Georg Hubertus, Prof. Dr., D-60598 Frankfurt (DE)

(56) Entgegenhaltungen:
- EP-A- 0 580 945
- DE-U- 9 417 182
- US-A- 5 152 687
- US-A- 5 302 126
- MECHANISCHE VERBINDUNGSTECHNIK, Bd. 14, Nr. 1, 1.Januar 1990 DUSSELDORF DE, Seite 16 XP 000107511 BECHLER 'Knochenschraube'

## Beschreibung

Die Erfindung betrifft ein zweiphasiges Zahnimplantat, mit einer ersten, in den Kieferknochen einzusetzenden Implantatkomponente mit einer zentralen Aufnahmeöffnung und einer zweiten, den zahntechnischen Aufbau tragenden Implantatkomponente, die einen konischen Aufnahmekörper für den Zahnersatz und einen in die Aufnahmeöffnung der ersten Implantatkomponente passenden Teil aufweist.

Enossale Zahnimplantate werden zur Verankerung einzelner Zähne oder zahntechnischer Prothesenkonstruktionen verwendet. Unterschieden wird zwischen einphasigen und zweiphasigen Systemen, wobei zweiphasigen Systemen, die in einer ersten Phase verdeckt unter dem Zahnfleisch unbelastet sicher einheilen können und erst für die zweite, die eigentliche Belastungsphase mit einem den künstlichen Zahn oder die zahnprothetische Konstruktion tragenden Teil versehen werden, der Vorzug zu geben ist. Zur stabilen Primärfixation des im Kieferknochen zu verankernden Teils ist dieses mit einem geeigneten Schraubenprofil oder mit anderen makroskopischen oder mikroskopischen Oberflächenstrukturen versehen. Als geeignete Werkstoffe sind metallische und keramische Werkstoffe bekannt.

Der mechanischen Verbindung der beiden Implantatkomponenten, dem im Kieferknochen verankerten Teil und dem daran angekoppelten, durch das Zahnfleisch tretenden und in die Mundhöhle ragenden Teil, kommt eine große Bedeutung zu. Allgemeine Anforderungen an ein solches Verbindungselement sind die Aufnahme und Weiterleitung hoher Kaukräfte bei kleinsten Abmessungen und die spielfreie, möglichst bakteriendichte Verbindung zwischen den beiden Implantatkomponenten. Eine derartige Verbindung auf der Basis eines Konus ist aus WO 85/02337 bekannt.

Anatomische, biomechanische und ästhetische Anforderungen können den Einsatz einer mechanischen Verbindung erfordern, die einen Winkel zwischen dem im Knochen verankerten Teil und dem die zahntechnische Konstruktion tragenden, in die Mündhöhle ragenden Teil aufweist. Wegen des eingeschlossenen Winkels zwischen den beiden ImplantatKomponenten werden an ein solches Verbindungselement erhöhte Anforderungen bezüglich Verdrehsicherheit gegeneinander und Positioniergenauigkeit gestellt. Eine Verbindung mittels einer einfachen Gewinde-Verschraubung, wie beispielshaft in DE 24 54 414 A1 und DE 24 13 883 A1 beschrieben, würde diesen Anforderungen nicht genügen. Zur Lösung dieser Aufgabe werden vornehmlich formschlüssige Verbindungen, wie passgenaue Sechskant- oder Achtkant-Geometrien gewählt. Derartige formschlüssige Verbindungen finden sich beispielsweise in DE 40 28 855 A1, EP 0 438 048 A1, DE 41 27 839 A1, EP 0 504 119 A1, EP 0 323 421 A2 und WO 94/06367.

In DE 40 28 855 A1 wird eine Distanzhülse mit stirnseitig ineinandergreifender formschlüssiger Verzahnung vorgeschlagen, die eine verdrehsichere Verbindung zwischen den beiden Implantatkomponenten ermöglicht, wobei in dieser Konstruktion vier mögliche Positionen beschrieben sind, und sich diese Verzahnung im Innern des im Kieferknochen einzusetzenden Teils befindet. Vorausgesetzt, daß die Einleitung der durch die Kaubeanspruchung verursachten Rotationskräfte über diese Hülse und nicht über den darin einschraubbaren, nicht rotationsgesicherten Implantatpfosten erfolgt, bildet diese Verbindung eine Rotationssicherung, wie sie z.B. für den Einzelzahnersatz notwendig ist. Konstruktions- und fertigungsbedingt läßt diese Anordnung keine spaltfreie Verbindung zu. In der das gleiche Implantat betreffenden DE 40 28 857 wird alternativ zum geometrischen Formschluss eine mittels eines deformierten Zwischenrings zu erzielende Verdrehsicherung vorgeschlagen. Durch die Montagekraft einer Schraubverbindung werden beide Stirnflächen des Zwischenringes in Vertiefung beziehungsweise Erhebung der zu verbindenen Teile gepreßt. Diese Rotationssicherung unterliegt den kaufunktionellen Kräften, wobei die Wirkung der Verdrehsicherung durch weitere Deformation des Zwischenringes unter der erheblichen Kaubelastung nachlassen kann. Bedingt durch den geringen geometrischen Formschluss der mögichen Deformation und durch die des Ringes eigene Weichheit, bietet dieses Konzept eine erheblich geringere Sicherungswirkung gegen das Losdrehen der gefügten Komponenten als der geometrische Formschluss. Auch diese Verbindung ist, wie das in DE 40 28 855 beschriebene Konzept, nicht spaltfrei ausführbar.

Die in WO 94/06367, EP 0 438 048 A1, DE 40 22 753 und DE 41 27 839 A1 vorgeschlagenen verdrehsicheren Verbindungen basieren ebenfalls auf ineinandergreifenden Formschlussverbindungen, mit dem Nachteil der in Schritten vorgegebenen Rotationsposition und der nicht erzielbaren Spaltfreiheit dieser Verbindung, wobei in der in EP 0 438 048 skizzierten Anordnung zwei formschlüssige Verbindungen hintereinander aufgereiht sind, und dadurch die Feinheit der Positionseinstellung zwar gesteigert werden kann, jedoch ist die Rotationsposition des in den Knochen eingesetzten und nach der Einheilphase dort fest verankerten Teils auch hier für die endgültige Position des zahntechnisch zu versorgenden, in den Mund ragenden Pfeilers vorbestimmend.

Eine weitere Schwierigkeit aller formschlüssiger Rotationssicherungen ist die Notwendigkeit diese Verbindungen auch in einer Serienfertigung in allen Teilen spielfrei zueinander passend herzustellen. Bedingt durch die schwellende Beanspruchung, hervorgerufen durch die kaufunktionelle Belastung mit großen Kräften und hoher Zyklenanzahl, besteht die Gefahr, daß ein geringes vorhandenes Spiel im Formschluss der montierten Konstruktion sich mit zunehmender Funktionsdauer vergrößert und dies in der Folge zu einer Desintegration der gesamten zahntechnischen Konstruktion führt. In EP 0 593 926 A1 ist deshalb ein sich unter der Vorspannung durch die Montage deformierendes Element zur Aufhebung dieses Spiels in einer Sechskantkonstruktion beschrieben. Dieses elastisch und/oder plastisch sich deformierende Element unterliegt wieder der kaufunktionellen Belastung, was wiederum das Risiko der Lockerung der Verbindung birgt.

Nachteil aller bisher bekannter formschlüssigen Verbindungen ist also die begrenzte Anzahl der möglichen Positionen, die nur sehr aufwendig erzielbare Spaltfreiheit dieser Verbindungselemente und die ebenfalls sehr schwer herzustellende Spielfreiheit dieser Konstruktionen. Die Rotationsposition des Implantates muß aber bereits bei der operativen Insertion im Hinblick auf die spätere Inklination des Aufbaupfostens vorgelegt werden, da nach knöcherner Einheilung des Implantates bei den beschriebenen Verbindungen, wie z.B. bei der Achtkantverbindung nur noch Positionierungsschritte von 45° möglich sind. Bei allen formschlüssigen Zentrierungen müssen zur spaltfreien Verbindung alle möglichen zueinanderliegenden Flächenpaarungen paßgenau ausgeführt sein, was ein äußerst präzise Fertigungstechnik voraussetzt.

Mittels Konus-Verbindungen mit fest angesetztem Gewinde, wie in WO 85/02337 beschrieben, lassen sich zwar spalt- und spielfreie Verbindungen, die hohe axiale Kräfte und hohe Biegekräfte auf kleinstem Raum übertragen können, erzeugen. Wegen der begrenzten möglichen Einzugskraft, bedingt durch das festangesetzte Gewinde, eignen sich diese aber nicht für die Übertragung von hohen Kräften in Umfangsrichtung, wie sie bei der Anwendung als Einzelzahnimplantat oder im Falle eines zwischen den Implantatkomponenten eingeschlossenen Winkels auftreten.

Die in WO 94/06369 vorgeschlagene Kombination einer formschlüssigen und einer kraftschlüssigen Konusverbindung mittels einer Verbindungshülse ermöglicht zwar die stufenlose Einstellung der Rotationsposition. Diese Kombination beinhaltet aber die oben beschriebenen Risiken der spiel- und spaltbehafteten Verbindung. Zusätzlich wird eine derartig ausgeführte Verbindung, wegen des notwendigen Bauvolumens, bei gegebener kaufunktioneller Belastung, den möglichen kleinsten Implantatdurchmesser begrenzen, was eine begrenzte Indikation des Implantates bedingt.

US-A-5 152 687 offenbart ein Implantat das alle Merkmale des Oberbegriffs des Anspruchs 1 aufweist.

In US 5,302,126 ist eine nicht-selbsthemmende Steilkonusverbindung mit einer zusätzlichen Rotationssicherung durch Stift-Konus-Kombinationen auf der Konusmantelfläche beschrieben. Damit ist die Rotationsposition dieser Verbindung nicht frei wählbar, sondern durch die Anzahl der Bohrungen bestimmt.

Es war daher Aufgabe der vorliegenden Erfindung, ein stufenlos positionierbares und spaltfreies zweiphasiges Zahnimplantat zu entwickeln, mit einer ersten, in den Kieferknochen einzusetzenden Implantatkomponente mit einer zentralen Aufnahmeöffnung und einer zweiten, den zahntechnischen Aufbau tragenden Implantatkomponente, die einen konischen Aufnahmekörper für den Zahnersatz und einen in die Aufnahmeöffnung der ersten Implantatkomponente passenden Teil aufweist. Diese in der Umfangrichtung des Implantatkörpers stufenlose Verbindung muß den hohen mechanischen Anforderungen durch die Kaukräfte trotz zierlicher Dimensionierung gerecht werden und eine dauerhafte Spaltfreiheit gewährleisten, wobei besonders die im Falle eines zwischen den Achsen der beiden Implantat komponenten eingeschlossenen Winkels auftretenden Rotationskräfte sicher aufgenommen und übertragen werden sollen.

Diese Aufgabe wird erfindungsgemäß dadurch gelöst, daß die Aufnahmeöffnung in der ersten Implantatkomponente konisch ist und der darin passende Teil der zweiten Implantatkomponente ein darauf angepasster Konus ist, wobei die zweite Implantatkomponente von einer zentralen Bohrung durchsetzt ist, in der der verjüngte zylindrische Schaft einer Zugschraube liegt, die ein verbreitetes Ende mit einem äußeren Befestigungswinde aufweist, welches in das Innengewinde einer in der Verlängerung der Aufnahmeöffnung verlaufenden Sackbohrung passt.

Hierbei werden der Winkel der konischen Aufnahmeöffnung der ersten Implantatkomponente und der Winkel des darin passenden Teils der zweiten Implantatkomponente so gewählt, daß eine selbsthemmende Konusverbindung entsteht. Die Winkel sind daher normalerweise von unterschiedlicher Größe.

Vorzugsweise fluchten die Achsen der beiden konischen Teile der zweiten Implantatkomponente miteinander. Genausogut können diese Achsen aber auch einen Winkel einschließen.

Weiterhin ist es von Vorteil, wenn die zentrale Bohrung der zweiten Implantatkomponente in dem zur Mundhöhle gerichteten Ende so erweitert ist, daß der Kopf der Zugschraube darin Aufnahme findet.

Vorteilhaft ist es auch, wenn das verbreitete Ende der Zugschraube irreversibel mit dem verjüngten Schaft verbunden ist, und die erste Implantatkomponente eine im wesentlichen zylindrische Außenform mit sphärisch gerundetem Ende und ein Gewinde mit sich ändernder Flankentiefe aufweist, wobei sich die Form der Gewindeflanken, ausgehend vom im Knochen versenkten Ende nach oben zur Aufnahmeöffnung hin kontinuierlich ändert, wobei die zur Aufnahmeöffnung hin nach oben weisende Gewindeflanke als Planfläche und die nach unten weisende, sich in der Form ändernde Gewindeflanke kurvenförmig konkav ausgebildet ist.

Die erfindungsgemaß ausgebildete Konusverbindung ermöglicht mittels des auf die Reibungsverhältnisse der Konusverbindung abgestimmten Konuswinkels und der zentralen, in der Konusachse verlaufenden Zugschraube eine festgefügte spaltfreie und rotationsstabile Verbindung der Implantat-Komponenten, wobei sich die Rotationsposition der beiden Implantatkomponenten bei der Montage frei und stufenlos wählen läßt. Um den beengten Platzverhältnissen und den mechanischen Anforderungen der Verbindung zu entsprechen, ist die Zugschraube im Durchtrittsbereich des die Axial- und Biegekräfte aufnehmenden Konus verjüngt und verbreitert sich im Bereich des die Zugkräfte aufnehmenden Gewindes. Die Kopfauflage der Zugschraube ist zu Dichtungszwecken mit Vorzug ebenfalls konisch ausgebildet, wobei die Reibwirkung des Konus der Zugschraube deutlich unterhalb der Reibwirkung des Verbindungskonus liegt. Durch die nahe der neutralen Faser der biegebelasteten Konusverbindung gelegene dünne Zugschraube wird die Tragfähigkeit der Konusverbindung nur unwesentlich geschwächt. Die Abstimmung zwischen dem Winkel des Verbindungskonus, des Schaftquerschnittes der Zugschraube und dem Konuswinkels unter dem Schraubenkopf der Zugschraube kann eine optimale Belastbarkeit der Konusverbindung bezüglich Axial- und Biegekräften und Kräften in Umfangsrichtung erzielt werden. Mit Vorzug wird der Konuswinkel so gewählt, daß sich die Verbindung im Bereich der Selbsthemmung befindet und die in der Anwendung auftretenden Kräfte nie diesen Bereich der Selbsthemmung überschreiten, wodurch keine zusätzlichen Betriebskräfte auf die Zugschraube übertragen werden. Durch gezielte kleine Winkelabweichungen zwischen Außen- und Innenkonus kann eine erhöhte Dichtwirkung im Konuseintrittsbereich oder eine Beeinflussung der Spannung des im Knochen verankerten Implantatteils erreicht werden. Bei leicht größerem Winkel des Außenkonus gegenüber dem Innenkonus wird im Sinne einer Quetschkante eine erhöhte Dichtwirkung im Konuseintrittsbereich erzielt. Bei leicht kleinerem Winkel des Außenkonus gegenüber dem Innenkonus werden Spannungen des im Knochen versenkten Teils, hervorgerufen durch die Konusverbindung, hin zu Bauteilmitte verlagert.

Weitere Einzelheiten ergeben sich aus der folgenden Beschreibung der in den Zeichnungen schematisch dargestellten Ausführungsbeispiele der Erfindung.
- Fig.1:: Eine erfindungsgemäß ausgebildete Konusverbindung mit zentraler Zugschraube.
- Fig.2:: Eine erfindungsgemäß ausgebildete Konusverbindung mit zentraler Zugschraube.
- Fig.3:: Einzelheit der Zugschraube mit verjüngtem Querschnitt im Bereich des Verbindungskonus.

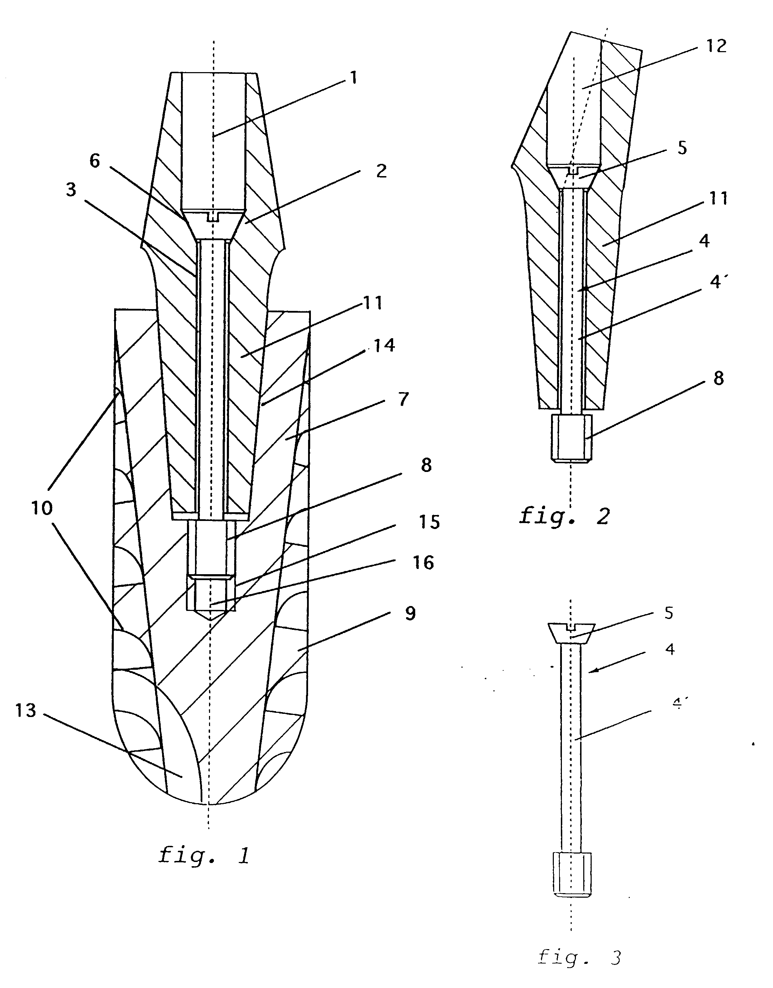

Die als Verbindungselement dienende zweite Implantatkomponente (11) nach Fig.1 und 2 ist entlang seiner Achse (1) durchbohrt, wobei die Bohrung (3) im Bereich des in die Mundhöhle ragenden Endes (2) erweitert ist. Der Durchmesser der erweiterten Bohrung (3) ist dem Kopf (5) einer zentralen Zugschraube (4) angepaßt. Im Bereich der zentralen Bohrung (3) ist der Durchmesser geringfügig größer als der Schaftdurchmesser der zentralen Zugschraube (4). Der Kopf (5) dieser zentralen Zugschraube (4) befindet sich in der erweiterten Bohrung (3) des in die Mundhöhle ragenden Endes (2). Der Konuswinkel der Kopfauflage (6) wird so gewählt, daß zum einen eine sichere Abdichtung des Schraubenkopfes (5) auf der Auflage gewährleistet wird und zum anderen eine ausreichende Vorspannung der Zugschraube (4) möglich ist. Die Winkel des Innenkonus der im Knochen verankerten ersten Implantatkomponente (7) und des in diesem mechanisch zu befestigenden Konuszapfens sind identisch oder aufeinander abgestimmt. Dieser Winkel wird so ausgeführt, daß eine Selbsthemmung der Konusverbindung bei den möglichen Kombinationen aus Axialkräften, Biegekräften und Kräften in Umfangsrichtung gegeben ist. Die Zugschraube (4) endet in einem größeren Querschnitt am unteren Ende (8), der mit einem Befestigungsgewinde versehen ist, mittels welchem die Zugschraube (4) und damit der Verbindungskonus gegen die im Knochen verankerte erste Implantatkomponente (7) verspannt wird.

Mittels eines speziellen Außengewindes (9) dessen Flankengeometrie (10) sich über die Implantat-Länge verändert, wird die erste Implantatkomponente (7) im Knochen primär verankert und während der Einheilphase stabil von Knochengewebe umschlossen. Durch die besondere Form des Außengewindes werden die Kaukräfte entsprechend der Flächennormalen der Gewindeflanken zerlegt und entsprechend der sich über die Implantatlänge ändernden Form dieser Flanken gezielt in der Tiefe des Knochenvolumens eingeleitet. Unterstützt wird dieser Formschluß durch Ausspaarungen (13) am unteren Ende und durch eine Mikrostruktur auf der gesamten Oberfläche, die mit dem spongiösen Knochenvolumen in Kontakt tritt.

Die zweite Implantatkomponente (11) hat die Form zweier mit der Basis aufeinander stehender zylindrischer Kegelstümpfe, deren Achsen fluchten oder miteinander einen Winkel einschließen können, wobei der eine der beiden Konen in die Aufnahmeöffnung (14) der im Knochen verankerten ersten Implantatkomponente (7) paßt, während der andere Konus den Zahnersatz aufnimmt.

Um der mechanischen Beanspruchung als vorgespanntes Element einerseits und den Miniaturisierungsanforderungen andererseits Rechnung zu tragen, ist die Zugschraube (4) im zentralen Bereich (4') verjüngt.

Die zentrale Verjüngung (4') der Zugschraube (4) ist auch nötig, um bei dem kleinen Durchmesser des Implantates und dem damit verbundenen geringen zur Verfügung stehenden Bauvolumen der Konusverbindung eine ausreichende Biegefestigkeit des Konus und eine ausreichende Stützlänge der ineinander gefügten Konuspaarung zu erzielen. Gleichzeitig ist damit eine ausreichend große Auflage des Schraubenkopfes (5) und ein ausreichend großer Durchmesser des Befestigungsgewindes am unteren Ende (8) der Zugschraube (4) zu erzielen.

Eine Möglichkeit zur technischen Ausführung der Verjüngung bietet eine Schweißverbindung des unteren Endes (8) oder alternativ des Schraubenkopfes (5) an der Zugschraube (4). Wegen des gegenüber dem Schraubenkopf (5) und dem Gewinde kleineren Bohrungsdurchmessers (3) ist die Zugschraube (4) unlösbar mit dem Verbindungskonus verbunden. Im Falle der Verwendung eines Titan-Implantatwerkstoffs kann diese Verbindung z.B. mittels einer Laserschweißung ausgeführt sein. Alternativ können andere stoffschlüssige Verbindungsverfahren oder eine formschlüssige Verbindung, z.B. ein Gewinde gewählt werden.

Zur Erzeugung der beabsichtigten Haftreibung der KonusVerbindung, die besonders zur Aufnahme der in Umfangsrichtung wirkenden Betriebskräfte bei Kombinationen, die einen Winkel (12) zwischen den beiden Implantatkomponenten einschließen, von Bedeutung ist, wird die zentrale Zugschraube (4) mittels eines für die Anwendung im Mund entsprechend miniaturisierten Drehmomentschlüssels definiert vorgespannt. Die Verwendung eines Drehmomentschlüssels gewährleistet die reproduzierbare, spaltfreie und damit keimdichte Verbindung der beiden Komponenten.

Mittels einer standardisierten, dimensionsgleichen Konusverbindung können im Kieferknochen zu verankernde Teile verschiedenster Geometrie, z.B. mit unterschiedlichen Druchmessern und Längen, frei mit in die Mundhöhle ragenden Teilen kombiniert werden, wodurch bei relativ kleiner Komponentenanzahl ein hoher Grad der Anpassung an die individuellen Gegebenheiten des zu versorgenden Patienten erzielt wird.

## Patentansprüche

1. Stufenlos positionierbares und spaltfreies zweiphasiges Zahnimplantat mit einer ersten, in den Kieferknochen einzusetzenden Implantatkomponente (7) mit einer zentralen Aufnahmeöffnung (14) und einer zweiten, den zahntechnischen Aufbau tragenden Implantatkomponente (11), die einen konischen Aufnahmekörper für den Zahnersatz und einen in die Aufnahmeöffnung (14) der ersten Implantatkomponente (7) passenden Teil aufweist, wobei die Aufnahmeöffnung (14) in der ersten Implantatkomponente (7) konisch ist und der darin passende Teil der zweiten Implantatkomponente (11) ein darauf angepaßter Konus ist, wobei die zweite Implantatkomponente (11) von einer zentralen Bohrung (3) durchsetzt ist, in der der verjüngte zylindrische Schaft (4') einer Zugschraube (4) liegt, die ein äußeres Befestigungsgewinde aufweist, welches in das Innengewinde (15) einer in der Verlängerung der Aufnahmeöffnung (14) verlaufenden Sackbohrung (16) paßt,
**dadurch gekennzeichnet,**
daß die Zugschraube (4) gegenüber der zentralen Bohrung (3) ein verbreitertes Ende (8) aufweist und daß der Winkel der konischen Aufnahmeöffnung (14) und der Winkel des darin passenden Teils der zweiten Implantatkomponente (11) so gewählt sind, daß eine selbsthemmende Konusverbindung entsteht.

2. Zahnimplantat nach Patentanspruch 1,
**dadurch gekennzeichnet,**
daß die Winkel unterschiedliche Größe besitzen.

3. Zahnimplantat nach Patentanspruch 1,
**dadurch gekennzeichnet,**
daß die Achsen der beiden konischen Teile der zweiten Implantatkomponente (11) miteinander fluchten.

4. Zahnimplantat nach Patentanspruch 1,
**dadurch gekennzeichnet,**
daß die Achsen der beiden konischen Teile der zweiten Implantatkomponente (11) einen Winkel einschließen.

5. Zahnimplantat nach Patentanspruch 1 bis 4,
**dadurch gekennzeichnet,**
daß die zentrale Bohrung (3) in dem zur Mundhöhle gerichteten Ende so erweitert ist, daß der Kopf (5) der Zugschraube (4) darin Aufnahme findet.

6. Zahnimplantat nach einem der vorhergehenden Patentansprüche,
**dadurch gekennzeichnet,**
daß das verbreitete Ende (8) der Zugschraube (4) irreversibel mit dem verjüngten Schaft (4) verbunden ist.

7. Zahnimplantat nach einen der vorhergehenden Patentansprüche,
**dadurch gekennzeichnet,**
daß die erste, im Knochen zu verankernde Implantatkomponente (7) eine im wesentlichen zylindrische Aussenform mit sphärisch gerundetem Ende und ein Gewinde (8) mit sich ändernder Flankentiefe aufweist, wobei sich die Form der Gewiedeflanken (10) ausgehend vom im Knochen versenkten Ende nach okklusal zur Aufnahmeöffnung hin kontinuierlich ändert.

8. Zahnimplantat nach Patentanspruch 7,
**dadurch gekennzeichnet,**
daß die zur Aufnahmeöffnung hin nach okklusal weisende Gewindeflanke (10) als Planfläche und die nach apikal weisende, sich in der Form ändernde Gewindeflanke (10) kurvenförmig konkav ausgebildet ist.

## Claims

1. Steplessly positionable and gap-free two-phase tooth implant with a first implant component (7), having a central seating opening (14), which is to be inserted in the jawbone, and a second implant component (11) which carries the dental structure and includes a conical seating element for the dental prosthesis and a part which fits into the seating opening (14) of the first implant component (7), the seating opening (14) in the first implant component (7) being conical and the part of the second implant component (11) which fits into it being a matching cone, the second implant component (11) having passing through it a central bore (3) within which is located the tapered cylindrical shaft (4') of a tension screw (4) which has an outer fastening thread which fits into the inner thread (15) of a blind bore (16) running in the elongation of the seating opening (14),
characterized in that
the tension screw (4) has a widened end (8), by comparison with the central bore (3), and the angle of the conical seating opening (14) and the angle of the part of the second implant component (11) which fits within it are selected so as to produce a self-locking cone joint.

2. Tooth implant according to claim 1,
characterized in that
the angles are of different magnitudes.

3. Tooth implant according to claim 1,
characterized in that
the axes of the two conical parts of the second implant component (11) are in alignment with one other.

4. Tooth implant according to claim 1,
characterized in that
the axes of the two conical parts of the second implant component (11) enclose an angle.

5. Tooth implant according to claims 1 to 4,
characterized in that
the central bore (3) is widened in the end directed towards the mouth cavity so that the head (5) of the tension screw (4) is seated within it.

6. Tooth implant according to one of the preceding claims,
characterized in that
the widened end (8) of the tension screw (4) is irreversibly joined to the tapered shaft (4).

7. Tooth implant according to one of the preceding claims,
characterized in that
the first implant component (7) which is to be anchored in the bone has a substantially cylindrical outer form with a spherically rounded end and a thread (8) with a varying flank depth, the form of the thread flanks (10) varying continuously in the occlusal direction from the end embedded in the bone towards the seating opening.

8. Tooth implant according to claim 7,
characterized in that
the thread flank (10) which faces in the occlusal direction towards the seating opening is formed as a plane surface and the thread flank (10) which faces in the apical direction, varying in form, has a curved, concave shape.

## Revendications

1. Implant dentaire diphasé pouvant être mis en position de façon continue et sans fente, comprenant une première composante (7) de l'implant à insérer dans l'os de la mâchoire, avec une ouverture centrale de réception (14) et une deuxième composante (11) de l'implant, qui porte la structure technique dentaire, qui présente un corps conique de réception pour la prothèse dentaire et une partie qui s'ajuste dans l'ouverture de réception (14) de la première composante (7) de l'implant, l'ouverture de réception (14) dans la première composante (7) de l'implant étant conique et la partie qui s'ajuste dedans de la seconde composante (11) de l'implant étant un cône adapté à cela, la deuxième composante de l'implant (11) étant traversée par un alésage central (3), dans lequel se trouve la tige cylindrique rétrécie (4') d'une vis de tension (4), qui présente un filetage extérieur de fixation, qui s'ajuste dans le filetage intérieur (15) d'un trou borgne (16) qui s'étend dans le prolongement de l'ouverture de réception(14),
caractérisé en ce que
- la vis de tension (4) présente par rapport à l'alésage central (3) une extrémité élargie (8) et
- l'angle de l'ouverture conique de réception (14) et l'angle de la partie de la deuxième composante (11) de l'implant, qui s'ajuste dedans, sont choisis de telle sorte que l'on a une liaison à cônes autoblocante.

2. Implant dentaire selon la revendication 1,
caractérisé en ce que
les angles possèdent des grandeurs différentes.

3. Implant dentaire selon la revendication 1,
caractérisé en ce que
les axes des deux parties coniques de la deuxième composante (11) de l'implant sont en alignement l'un avec l'autre.

4. Implant dentaire selon la revendication 1,
caractérisé en ce que
les axes des deux parties coniques de la deuxième composante (11) de l'implant forment un angle.

5. Implant dentaire selon la revendication 1 à 4,
caractérisé en ce que
l'alésage central (3) est élargi dans l'extrémité qui est tournée vers la cavité buccale de telle façon que la tête (5) de la vis de tension (4) puisse être reçue dedans.

6. Implant dentaire selon l'une des revendications précédentes,
caractérisé en ce que
l'extrémité élargie (8) de la vis de tension (4) est reliée de façon irréversible à la tige rétrécie (4).

7. Implant dentaire selon l'une des revendications précédentes,
caractérisé en ce que
la première composante (7) de l'implant, à ancrer dans l'os, présente une forme extérieure sensiblement cylindrique avec une extrémité arrondie de forme sphérique, et un filetage (9) avec des flancs dont la profondeur varie, la forme des flancs du filetage (10) se modifiant de façon continue en partant de l'extrémité enfoncée dans l'os et en allant vers le fond de l'ouverture de réception.

8. Implant dentaire selon la revendication 7,
caractérisé en ce que
les flancs du filetage (10), qui son orientés en direction occlusale de l'ouverture de réception sont constitués sous la forme de surfaces planes et les flancs du filetage (10) qui sont tournés en direction buccale sont en forme de courbe concave variable.
